Europäisches Patentamt

European Patent Office

Office européen des brevets

(11) Publication number: **0 096 207**
**B1**

# EUROPEAN PATENT SPECIFICATION

(45) Date of publication of patent specification: **16.06.87**

(51) Int. Cl.⁴: **C 09 D 5/02, C 09 D 3/64**

(21) Application number: **83104108.2**

(22) Date of filing: **27.04.83**

(54) **Water-borne permanent coating compositions and processes therefor.**

(30) Priority: **24.05.82 US 382853**

(43) Date of publication of application:
**21.12.83 Bulletin 83/51**

(45) Publication of the grant of the patent:
**16.06.87 Bulletin 87/25**

(84) Designated Contracting States:
**AT BE DE FR GB IT NL SE**

(56) References cited:
**FR-A-2 440 388**
**FR-A-2 449 118**
**GB-A-2 085 466**
**US-A-4 187 204**

(73) Proprietor: **ASHLAND OIL, INC.**
**R.C. Willson, Jr. P.O. Box 391, BL-5**
**Ashland Kentucky 41114 (US)**

(72) Inventor: **Winters, Jonathan K.**
**5962 Woodland Avenue**
**Portsmouth Ohio 45662 (US)**
Inventor: **Savell III, Fred B.**
**2708 Yorkshire Road**
**Mobile Alabama 36605 (US)**

(74) Representative: **Lambert, Hugh Richmond et al**
**D. YOUNG & CO. 10 Staple Inn**
**London, WC1V 7RD (GB)**

# 0 096 207

**Description**

This invention relates to the anti-corrosion protection of metal substrates by the application of a varnish-type anti-corrosive coating thereto.

The protection of metal surfaces by the use of varnish-type coatings has advantages, such as visibility of characters and illustrations below the coating surface, as well as decorative features. Historically, metal varnishes have required organic base solvents, with the attendant workers' exposure and environmental disadvantages. In addition, prior organically-based systems have been incapable of solubilizing many additives, such as chromates, nitrites, borates, molybdates, and triazoles.

The reported water-borne systems, on the other hand, have had other deficiencies. Rust and corrosion protection have been so poor that water-borne types has been essentially restricted to cosmetic functions.

In contrast, the present invention provides water-borne coatings having substantial life even in corrosive environments.

These are aqueous alkyd resin-containing varnishes. Such varnishes are known. For example, an aqueous alkyd resin-containing varnish is proposed in FR—A—2,440,388 for the purpose of producing a ripple-free multi-layer varnish on plywood. However, it has not been suggested that such compositions have any utility on metals, and particularly in providing hard, flexible, permanent, low odor, corrosion preventative coatings on metal substrates and which are light in color.

These coating formulations also have excellent air cure properties on metals and storage stability.

Broadly speaking, in accordance with this invention there is provided a method of forming a corrosion resistant coating on a metal substrate which comprises applying to the substrate an aqueous composition comprising, by weight of the total composition:

(a) from 27 to 40% of a water-dispersible alkyd resin;

(b) from 1 to 15% of a coupling agent;

(c) from 0.1 to 3.5% of an amine, or ammonium hydroxide;

(d) from 0.1 to 5% (related to metal content) of a metallic drier; and

(e) water, 45% minimum; said composition having a pH in the range 7—10, and drying the coated substrate to deposit the anti-corrosive alkyd-resin containing film thereon.

Preferably the compositions used in the present invention will include alkyd resins derived from isophthalic acid, terephthalic acid, or phthalic anhydride modified so as to contain ester groups, which promote water dispersibility. These resins can be short oil, medium oil, long oil.

The average molecular weight of the resin constituent will preferably be in the range 150 to 450, more preferably 250 to 425 and most preferably 300 to 400.

Also, the degree of branching in the resin molecules should be selected so that after esterification the average molecular chain will contain a sufficient quantity of hydrophilic ends to achieve easy water dispersibility. Based on the information given below, this quantity will be obvious to those skilled in the art.

The average acid value of the resins useful in the present invention will preferably be in the range of from 15 to 100, more preferably 20 to 80 and most preferably 30 to 55.

As indicated the amount of resin used will be in the range of 27 to 40 weight percent, based on the weight of the composition, preferably 28 to 33 and most preferably 29 to 33 weight percent.

Commercially available resins useful in the present invention are the Kelsol resins from Spencer-Kellogg of Buffalo, N.Y., and particularly Kelsol 3907, water dispersible air dry resins from Cargill Co. of Minneapolis, Minnesota and resins from McCloskey Paint and Varnish Co. of Philadelphia, Pennsylvania.

Surfactants:

Surfactants useful with the present invention are the alcohol derived surfactants such as Surfynol 104A from Air Products of Allentown, Pennsylvania and Raybo 62 from Raybo Chemical Co. of Huntington, West Virginia.

These surfactants will act as levelling agents and in some cases, as antifoams. When used in the present invention, the amount of the surfactant used will be in the range 0.05 to 3, preferably 0.1 to 2.5 and most preferably 0.2 to 1.0 weight percent, based on the weight of the composition. However, this will vary in response to the selection and quantities of the other ingredients employed.

Coupling agents:

The coupling agents are a special feature of the compositions used in the present invention.

Several types of coupling agents can be employed including ethylene glycol ethers, preferably butyl and propyl ethers; hydroxy ethers (ether-alcohols), such as butyl cellosolve, propyl cellosolve and ethyl cellosolve, diethylene glycol monoethyl ether and monopropyl ether, alcohols such as ethanol, isopropanol and isobutanol and other compounds which will be evident to those skilled in the art to serve the purpose of rendering the ingredients of the composition mutually soluble in the water base.

Commercially available coupling agents that are useful with compositions of the present invention include: Ektasolve EP, manufactured by Eastman Kodak of New York, New York, and Propasol P, manufactured by Union Carbide of Danbury, Connecticut.

The coupling agent will generally be employed in quantities of from 1% to 15%, preferably from 3% to 12%, and most preferably from 4% to 10% based on the weight of the formulation.

2

In addition to its coupling functions, the coupling agent will usually be useful during the drying and curing process, after application of the coatings composition to substrates. For example, when carefully selected, the coupling agent will form an azeotrope with the water present in the composition, thus increasing volatility, speeding cure, and providing a more permanent coating. Some coupling agents will assist the final coating in other ways, e.g. by providing levelling of the final coating, avoiding pinholes and providing a more continuous, better quality dry film.

Water:

Deionized water will preferably be employed with the compositions of the present invention, in order to prevent chlorine, calcium, magnesium or other components of tap water from interfering with the compositions or their curing abilities. Distilled water could, of course, be employed but will generally be avoided for economic reasons.

Compositions of the present invention will generally contain a minimum of 45% water, preferably at least 50% and most preferably at least 60%, based on the total weight of the formulation.

As the compositions of the present invention are generally classifiable as oil-in-water emulsions of special character, too much water may cause swelling and loss of wetting properties.

pH:

The pH of the composition will generally be in the range 7.0—10, preferably 8.0—9.0 and most preferably 8.2—8.5. One should slightly overbase (make alkaline) the system to obtain maximum surfactant activity of the resin ester groups by reacting any residual acids which may be left from the normal end point of titration with an alkaline material, (e.g. amines, triethanolamine morpholine, or ammonium hydroxide) to form a soap. Excessive amounts of base should be avoided because they will form an extremely "hard" salt which is not miscible in water, thus causing the aqueous and non-aqueous phases to separate.

Driers:

The compositions used in the present invention will include metallic driers which are oxidizing in nature and react with the free ester sites of the dry resin film to form a harder, more impermeable protective film.

Preferred driers used in the present invention are cobalt driers, especially 6% cobalt drier such as cobalt hydrocure II from Mooney Chemical Co. of Cleveland, Ohio, and 12% cobalt drier from Ferro Corp. of Bedford, Pennsylvania, and manganese driers also available from the companies listed above. Although any concentration of cobalt and/or manganese will be useful, it is most preferred to use both a 6% cobalt drier and a 6% manganese drier.

Generally the amount of drier will be sufficient to provide a metal content in the range 0.1 to 5 weight percent based on the total formulation.

Chelating agents:

Also, when desirable, one may require faster oxidation of driers. This may be accomplished by use of a chelating agent.

One chelating agent particularly useful in the compositions used in accordance with the present invention is 1,1,1-phenanthraline which is sold under the tradename Activ-8 and is manufactured by R. T. Vanderbilt Co. of Norwalk, Connecticut.

The quantity of chelating agent to be employed can be calculated as about one-tenth of the weight of total metal present from the driers.

Inhibitors:

It may be desirable to give added protection to compositions of the present invention by the use of a water soluble metal inhibitor. Selections will be made by those skilled in the art based upon the desired finished composition and its intended application.

Inhibitors particularly useful in long term protection of ferrous alloys are the ammonium salts of dichromate and molybdate. These salts, where added in sufficient quantities not only add corrosion resistance to the finished dry film but also increase viscosity and impart thixotropy to the compositions while in solution. This provides an application aid in that very low solids content versions of this embodiment of the present invention will provide very high film building characteristics.

These inhibitors are commercially produced by Allied Chemical Company, a subsidiary of Allied Company located in Morriston, New Jersey.

Another inhibitor found to be particularly useful in the present invention, where the protection of non-ferrous alloys, such as aluminium, is a consideration is the sodium salt of tolytriazole. This product is commercially available from Sherwin-Williams Company of Chicago, Illinois.

These inhibitors will act as metal passivators. The amount of the inhibitors used will depend upon the severity of the application but have been found useful in the present invention at levels in the range from 0.01% to 1%, preferably 0.05% to 0.7% and most preferably 0.1% to 0.6%, based on the total weight of the formulation. However, this will vary in response to the selection and quantities of the other ingredients employed.

Amines:

Amines useful in the present invention are morpholine, triethanolamine, diethanolamine, ethanolamine and mixtures thereof. Ammonium hydroxide e.g. 26—28% ammonium hydroxide (referred to herein as concentrated ammonium hydroxide) may also be used.

The amount of amine or ammonium hydroxide will be in the range 0.1 to 3.5 weight percent, preferably 0.5 to 3.0, most preferably 0.5 to 2.5 weight percent.

Techniques in mixing:
Apparatus:

The apparatus used in mixing the coating composition will be those conventionally utilized in the preparation of coating compositions; e.g. kettles and mixing tanks having flow metering or measuring devices and agitation means; e.g. pumps mounted on side-arms connecting the main vessel, internal stirrers, contra-rotating shearing devices and any of the other available devices which are well known to the art.

Temperature:

In general, the water will be at about 70°F (21°C), and the non-aqueous ingredients will be transferred and mixed at that temperature. However, these temperatures are not narrowly critical and will vary to provide faster mixing or better compatibility of ingredients according to the observation of those skilled in the art.

Mixing procedure:

While the compositions may be manufactured continuously if desired, batch techniques will be more usually employed. For example, the total amount of water desired in the finished composition (e.g., 1700 gallons, 6562 litres) is charged to a mixing vessel large enough to hold the entire batch of the composition. Added to this are one half the amount of coupling agent used, the amine and, when desired, the inhibitor, with agitation. The water dispersible resin is then added to the mixing vessel and this mixture can be agitated while the drier is prepared in a separate vessel.

In a separate vessel the driers and the remaining coupling agent are mixed thoroughly, and that mixture is then added to the mixing vessel. The composition is then mixed until homogeneous, after which the composition is drawn off into shipping containers; e.g. tank cars, tank trucks, drums or smaller cans.

Quality control:

The finished composition, prior to packaging, will generally be checked for pH, solids content, freeze-thaw stability, corrosion-protection under accelerated conditions and other tests utilizing techniques well known to the coatings industry.

Application:

The water-borne coating compositions used in this invention may be applied to metal substrates to be protected by conventional application techniques, such as spraying, brushing, roller-coating, dipping, flow-coating, or electrostatic airless spraying. Coating thickness can be varied by changing the formulation, the number of coats, or the amount applied per coat, but in general will be in the range from about 0.5 to about 3 mils (13 to 67 μm) per coat, after drying.

Examples:

It will be understood by those skilled in the art that the invention is not to be restricted by the following examples, which merely illustrate the invention and that the invention is susceptible to a wide variety of modifications and variations without departing from the spirit thereof. For example, the compositions of the invention can be prepared as concentrates to which a substantial amount of water can be added later in order to avoid shipping water, particularly for international or other long distance shipments.

The compositions may also contain other useful ingredients such as biocides, antifoam agents, pigments, dyes or levelling agents, well known to those skilled in coatings technology.

Example I

The components for preparing this composition are as follows:

29.0 wt% Kelsol 3907:
57.8 wt% water;
10.0 wt% butyl cellosolve;
2.5 wt% concentrated ammonium hydroxide;
0.2 wt% cobalt drier (6% cobalt drier);
0.1 wt% manganese drier (6% manganese drier); and
0.04 wt% Activ-8.

The water is charged to a conventional mixing kettle, equipped with a rotary agitator, at a temperature

4

of 21°C (70°F). Five weight percent of butyl cellosolve and the ammonium hydroxide are then charged to the kettle. After agitation, the Kelsol 3907 is added. This solution is allowed to be agitated as the drier solution is prepared in a separate vessel.

To a second smaller vessel, the remaining butyl cellosolve is added, mixed with the Activ-8 and this solution is agitated well. The cobalt drier and the manganese drier are then added to the second container. After further agitation, this mixture is transferred to the main mixing kettle, which is further agitated until the composition is homogeneous.

If needed, the pH is then adjusted to 8.5 by addition of less than one part concentrated ammonium hydroxide. The solids content is then found to be 22%±1%.

The composition is then tested for corrosion resistance by applying it to a cold rolled 1010 steel panel. After drying for seventy-two hours, the test panel is subjected to a 5% salt (NaCl) spray at a temperature of 35°C (95°F) according to ASTM Test B-117. The test panel resists failure (corrosion) for 100 hours.

A similar test panel coated with the composition of this example resists 500 hours of exposure to 100% relative humdiity at 49°C (120°F) according to the techniques of ASTM Test D-2247.

A sample of the composition of this example survives five successive freeze-thaw cycles, each comprising 16 hours at −18°C (0°F), followed by eight hours at 25°C (77°F) with no separation or other evident deleterious effects. A sample of the composition of this example withstands 144 hours at 49°C (120°F) without separation or other observable deleterious effects.

When a panel as previously described is dipped into the composition of this example and allowed to dry at room temperature and approximately 50% relative humidity, the coating is cured and dry to the touch in 30 minutes.

The thickness of the composition on the above test panels is approximately 0.7 mil (approximately 18 microns or 0.18 millimeters).

Example II

The components of this composition are as follows:

30.3  wt%  Kelsol 3907;
50.0  wt%  water;
17.0  wt%  butyl cellosolve;
 2.3  wt%  concentrated ammonium hydroxide;
 0.2  wt%  cobalt drier (6% cobalt drier); and
 0.2  wt%  Activ-8.

The water is charged to a mixing vessel, equipped with a rotary agitator, at a temperature of 21°C (70°F). 8.5 wt% of butyl cellosolve and the ammonium hydroxide are then charged to the vessel. After agitation, the Kelsol 3907 is added. This solution can be allowed to stir while the drier solution is prepared in a separate vessel.

To a second smaller vessel, the remaining butyl cellosolve is added and mixed with the Activ-8, and this solution is agitated well. The cobalt drier is then added to the second vessel. After further agitation, this mixture is transferred to the main mixing vessel and the entire composition is further agitated until it is homogeneous.

Solids content is then found to be 23%±1%. The pH is then checked to insure that it is between 7.0—10, and preferably 8.2—8.5.

The composition is then tested for corrosion resistance by applying it to a cold rolled 1010 steel panel. After drying for 72 hours, the panel is subjected to a 5% salt (NaCl) spray at a temperature of 35°C (95°F) according to ASTM Test B-117. The panel resists failure for 100 hours.

A similar panel is coated with the composition of this example and is found to resist 500 hours of exposure to 100% relative humidity at 49°C (120°F) according to the techniques of ASTM Test D-2247.

The composition survives 5 successive freeze-thaw cycles, each comprising 16 hours at −18°C (0°F) followed by 8 hours at 25°C (77°F) with no separation or other evident deleterious effect. A sample of the composition of this example withstands 144 hours at 49°C (120°F) without separation or other observable or deleterious effect.

When a panel as previously described is dipped into the composition of this example and allowed to dry at room temperature and approximately 50% relative humidity, the coating is cured and dry to the touch in 35 minutes.

The thickness of the composition on the above test panels is approximately 0.7 mil (approximately 18 microns or 0.18 millimeters).

Example III

The components for this composition are:

29.3 wt% Kelsol 3907;
58.98 wt% water;
10.0 wt% butyl cellosolve;
1.5 wt% concentrated ammonium hydroxide;
0.02 wt% cobalt drier (6% cobalt drier); and
0.2 wt% Activ-8.

The composition is prepared as in Examples I and II and the solid content is found to be 22%±1%.

However, when this composition is tested for resistance, by applying it to a cold rolled 1010 steel panel and allowing it to dry for 72 hours, the ASTM Test B-117 shows that the test panels resist failure for only 40 hours. The relative humidity test, according to the techniques of ASTM Test D-2247 is only 72 hours.

The problems with Example III are believed to be encountered because the film cures poorly due to an insufficient amount of drier being present.

Example IV .

The components for this composition are as follows:

55.97 wt% water;
0.24 wt% ammonium dichromate;
1.78 wt% normal butyl alcohol;
32.68 wt% Kelsol 3907;
0.76 wt% cobalt Hydrocure II;
0.1 wt% Activ-8;
4.46 wt% butyl cellosolve;
2.08 wt% Ektasolve EP;
0.32 wt% Surfynol 104A; and
1.61 wt% concentrated ammonium hydroxide.

The water is charged to a conventional mixing kettle, equipped with a rotary agitator, at about 21°C (70°F). With agitation, the ammonium dichromate is then added, followed by the butyl alcohol, 1.04 wt% Ektasolve EP and the ammonium hydroxide. After agitation, the Kelsol 3907 is added and the solution is strongly agitated until it becomes homogeneous. This solution can be allowed to mix while the driers are formed in a second vessel.

To a second smaller vessel, the remaining 1.04 wt% Ektasolve EP and the Activ-8 are added. After strong agitation, the cobalt Hydrocure is added. After further agitation, this mixture is added to the mixing kettle and agitated until the composition is homogeneous.

The pH is then adjusted to approximately 8.2 by the addition of less than 1 part of ammonium hydroxide. The solid contents is found to be 25%±1%.

The composition is then tested for corrosion resistance by applying it to a cold rolled 1010 steel panel. After drying for 72 hours, the test panel is subjected to a 5% salt spray at a temperature of 35°C (95°F) according to ASTM Test B-117. The test panel resists failure for 300 hours.

A similar test panel coated with a composition of this example resists 1500 hours of exposure to 100% relative humidity at 49°C (120°F) according to the techniques of ASTM Test D-2247.

The composition survives 5 successive freeze-thaw cycles each comprising 16 hours at −18°C (0°F) followed by 8 hours at 25°C (77°F) with no separation or other evidence of deleterious effects. The composition withstands 144 hours at 49°C (120°F) without separation or other observable or deleterious effects.

When a panel as previously described is dipped into a composition of this example and allowed to dry at room temperature in approximately 50% relative humidity, the coating is cured and dry to the touch within 30 minutes.

The thickness of the composition on the above test panels is approximately 1.25 mils (approximately 37 microns or .37 millimeters).

Example V

The components for this composition are as follows:

32.70 wt% Kelsol 3907;
58.975 wt% water;
2.0 wt% normal butyl alcohol;
3.0 wt% butyl cellosolve;
2.4 wt% concentrated ammonium hydroxide;
0.4 wt% cobalt (6% cobalt drier) drier;
0.025 wt% Activ-8; and
0.5 wt% ammonium dichromate.

6

**0 096 207**

The water is charged to a conventional kettle equipped with a rotary agitator at a temperature of about 21°C (70°F). With agitation, the ammonium dichromate is added. With further agitation, 1.5 wt% of butyl cellosolve and the normal butyl alcohol are added, along with the ammonium hydroxide. This solution is allowed to stir while the driers are formed in a separate container.

In a second smaller vessel, the remaining butyl cellosolve is added followed, with agitation, by the cobalt drier and Activ-8. After agitation, this mixture is added to the main mixing vessel and the entire composition is agitated until it becomes homogeneous.

The pH is then adjusted to approximately 8.0—8.5. The solids content is then found to be 27%±1%.

The composition is tested as is set forth in Example IV, according to ASTM Test B-117 and the test panel resists failure for 300 hours.

A similar test panel coated with the composition of this example resists 600 hours of exposure to 100% relative humidity at 49°C (120°F) according to the techniques of ASTM Test D-2247.

A sample of the composition of this example survives 5 successive freeze-thaw cycles, each comprising 16 hours at −18°C (0°F) followed by 8 hours at 25°C (77°F) with no separation or other evident deleterious effects. The sample withstands 144 hours of 49°C (120°F) without separation or other observable deleterious effects.

When a panel as previously described is dipped into the composition of this example and allowed to dry at room temperature and approximately 50% relative humidity, the coating is cured and dry to the touch in 30 minutes.

The thickness of the composition of this example on the above test panel is approximately 1.25 mil (approximately 37 microns or 0.37 millimeters).

However, the composition of this example is very hazy at low temperatures, and this is believed to be caused by the low amount of coupling agent used.

Example VI

The components for this formulation are as follows:

30.0 wt% Kelsol 3907;
58.28 wt% water;
10.0 wt% butyl cellosolve;
1.0 wt% concentrated ammonium hydroxide;
0.5 wt% triethanolamine;
0.02 wt% (6% cobalt drier) cobalt drier; and
0.2 wt% Activ-8.

The composition is prepared per Examples I—III. The solids content is found to be 23%±1%.

The ASTM Test B-117, conducted as set forth in Examples I—III, shows that the test panel resists failure for 24 hours. The ASTM Test D-2247, conducted per Examples I—V, shows that the composition of this example resists 72 hours of exposure. The thickness of the composition on the test panels was 0.5 mil (approximately 13 microns or 0.13 millimeters).

The film of the composition of this example cures poorly and this is thought to be due to the composition not having enough drier present.

In the event that any of the trade names used herein are registered trade marks in any or all of the designated states, they are hereby acknowledged as such.

**Claims**

1. A method for the anti-corrosion protection of metal substrates, which comprises applying to the substrate an anti-corrosion coating composition, and drying the coated substrate thereby to deposit an anti-corrosive coating thereon, characterised in that the anti-corrosive coating composition is an aqueous composition comprising, by weight of the total composition:
(a) from 27 to 40% of a water-dispersible alkyd resin;
(b) from 1 to 15% of a coupling agent;
(c) from 0.1 to 3.5% of an amine, or ammonium hydroxide;
(d) from 0.1 to 5% (related to metal content) of a metallic drier; and
(e) water, 45% minimum; said composition having a pH in the range 7—10.
2. A method according to claim 1, characterised in that the composition additionally contains
(f) from 0.01 to 1%, based on the total weight of the composition, of a water-soluble metal inhibitor.
3. A method according to claim 2, as applied to the protection of ferrous metal substrates, characterised in that the inhibitor is ammonium dichromate or ammonium molybdate.
4. A method according to claim 2, as applied to the protection of non-ferrous metal substrates, characterised in that the inhibitor is sodium tolytriazole.
5. A method according to any one of claims 1—4, characterised in that the composition additionally contains a chelating agent in an amount equal to approximately 1/10th of the total metal provided by the metallic drier component, component (d).

7

6. A method according to claim 5, characterised in that the chelating agent is 1,1,1-phenanthraline.

7. A method according to any one of claims 1—6, characterised in that the composition additionally contains, based on the total weight of the composition, from 0.05 to 3% of a surfactant.

8. A method according to claim 7, characterised in that the surfactant is an alcohol.

9. A method according to any one of claims 1—8, characterised in that the alkyd resin is an ester group containing alkyd resin derived from isophthalic acid, terephthalic acid or phthalic anhydride, and has an average molecular weight in the range 150 to 450 and an acid value in the range 15 to 100.

10. A method according to any one of claims 1—9, characterised in that the coupling agent is an ethylene glycol ether, an ether-alcohol or an alcohol.

11. A method according to claim 10, characterised in that the coupling agent is selected from ethylene glycol butyl or propyl ether, ethyl-, propyl-, or butylcellosolve, diethyleneglycol monoethyl or monopropyl ether, ethanol, isopropanol and isobutanol.

12. A method according to any one of claims 1—11, characterised in that component (c) is ammonium hydroxide, morpholine, ethanolamine, diethanolamine or triethanolamine.

13. A method according to any one of claims 1—12, characterised in that the metallic drier, component (d), is a cobalt or manganese drier, or a mixture of the two.

14. A method according to claim 13, characterised in that the metallic drier, component (d), comprises both a 6% cobalt drier and a 6% manganese drier.

15. A method according to any one of claims 1—14, characterised in that the composition additionally contains a water-dispersible dye or pigment.

16. A method according to any one of claims 1—15, characterised in that the coating composition is applied to the substrate as a single coating having a thickness in the range 0.5 to 3 mils (13 to 67 μm).

## Patentansprüche

1. Verfahren zum Korrosionsschutz von Metallgrundschichten, wobei das Verfahren das Aufbringen einer Korrosionsschutzbelags-Zusammensetzung auf der Grundschicht sowie das Trocknen der beschichteten Grundschicht enthält, um dadurch einen Korrosionsschutzbelag darauf aufzubringen, dadurch gekennzeichnet, daß die Korrosionschutzbelags-Zusammensetzung eine wässrige Zusammensetzung ist, die, basierend auf dem Gewicht der gesamten Zusammensetzung, enthält:

(a) von 27 bis 40% eines in Wasser dispergierbaren Alkydharzes;

(b) von 1 bis 15% eines Kupplungsmittels;

(c) von 0,1 bis 3,5% eines Amins oder Ammoniumhydroxids;

(d) von 0,1 bis 5% (bezogen auf den Metallgehalt) eines metallischen Trockenmittels; und

(e) Wasser, Minium 45%; wobei die Zusammensetzung einen pH-Wert im Bereich von 7 bis 10 besitzt.

2. Verfahren gemäß Anspruch 1, dadurch gekennzeichnet, daß die Zusammensetzung zusätzlich enthält

(f) von 0,01 bis 1%, basierend auf dem Gesamtgewicht der Zusammensetzung, eines wasserlöslichen Metallinhibitors.

3. Verfahren gemäß Anspruch 2 für den Schutz von eisenhältigen Metallgrundschichten, dadurch gekennzeichnet, daß der Inhibitor Ammoniumdichromat oder Ammoniummolybdat ist.

4. Verfahren gemäß Anspruch 2 für den Schutz von nichteisenhältigen Metallgrundschichten, dadurch gekennzeichnet, daß der Inhibitor Natriumtolytriazol ist.

5. Verfahren gemäß jedem der Ansprüche 1 bis 4, dadurch gekennzeichnet, daß die Zusammensetzung zusätzlich einen Chelatbildner in einer Menge enthält, die etwa gleich 1/10 des gesamten Metalls ist, das vom Anteil des metallischen Trockenmittels, Anteil (d), herrührt.

6. Verfahren gemäß Anspruch 5, dadurch gekennzeichnet, daß der Chelatbildner 1,1,1-Phenanthralin ist.

7. Verfahren gemäß jedem der Ansprüche 1 bis 6, dadurch gekennzeichnet, daß die Zusammensetzung, basierend auf dem Gesamtgewicht der Zusammensetzung, zusätzlich von 0,05 bis 3% eines oberflächenaktiven Mittels besitzt.

8. Verfahren gemäß Anspruch 7, dadurch gekennzeichnet, daß das oberflächenaktive Mittel ein Alkohol ist.

9. Verfahren gemäß jedem der Ansprüche 1 bis 8, dadurch gekennzeichnet, daß das Alkydharz eine Estergruppe ist, die ein Alkydharz enthält, das von einer Isophthalsäure, Terephthalsäure oder Phthalanhydrid stammt und ein mittleres Molekulargewicht im Bereich von 150 bis 450 und eine Säurezahl im Bereich von 15 bis 100 besitzt.

10. Verfahren gemäß jedem der Ansprüche 1 bis 9, dadurch gekennzeichnet, daß das Kupplungsmittel ein Äthylenglykoläther, ein Ätheralkohol oder ein Alkohol ist.

11. Verfahren gemäß Anspruch 10, dadurch gekennzeichnet, daß das Kupplungsmittel aus Äthylenglykolbutyl oder Propyläther, Äthyl-, Propyl- oder Butylcellosolve, Diäthylenglykolmonoäthyl oder Monopropyläther, Äthanol, Isopropanol und Isobutanol ausgewählt wird.

12. Verfahren gemäß jedem der Ansprüche 1 bis 11, dadurch gekennzeichnet, daß der Anteil (c) ein Ammoniumhydroxid, Morpholin, Äthanolamin, Diäthanolamin oder Triäthanolamin ist.

13. Verfahren gemäß jedem der Ansprüche 1 bis 12, dadurch gekennzeichnet, daß das metallische Trockenmittel, Anteil (e), ein Kobalt- oder Mangantrockenmittel oder einer Mischung dieser beiden ist.

14. Verfahren gemäß Anspruch 13, dadurch gekennzeichnet, daß das metallische Trockenmittel, Anteil (d), sowohl 6% Kobalttrockner als auch 6% Mangantrockner enthält.

15. Verfahren gemäß jedem der Ansprüche 1 bis 14, dadurch gekennzeichnet, daß die Zusammensetzung zusätzlich eine in Wasser dispergierbare Farbe oder ein Pigment enthält.

16. Verfahren gemäß jedem der Ansprüche 1 bis 15, dadurch gekennzeichnet, daß die Belagszusammensetzung auf die Grundschicht als ein einziger Belag aufgebracht wird, der eine Dicke im Bereich von 14 bis 67 µm besitzt.

**Revendications**

1. Un procédé pour la protection anti-corroision de substrats métalliques qui consiste à appliquer au substrat une composition de revêtement anti-corrosion et à sécher le substrat revêtu, pour déposer ainsi sur celui-ci un revêtement anti-corrosion, caractérisé en ce que la composition de revêtement anti-corrosif est une solution aqueuse comprenant, en poids de la composition totale:

(a) de 27 à 40% d'une résine alkyle dispesable dans l'eau;

(b) de 1 à 15% d'un agent de couplage;

(c) de 0,1 à 3,5% d'une amine, ou d'hydroxyde d'ammonium;

(d) de 0,1 à 5% (par rapport au métal présent) d'un siccatif métallique; et

(e) de l'eau, 45% au minimum; cette composition ayant un pH dans l'intervalle de 7 à 10.

2. Un procédé suivant la revendication 1, caractérisé en ce que la composition contient en outre (f) de 0,01 à 1% par rapport au poids total de la composition d'un inhibiteur de métaux solubles dans l'eau.

3. Un procédé suivant la revendication 2, tel qu'appliqué pour la protection des substrats de métaux ferreux, caractérisé en ce que l'inhibiteur est du dichromate d'ammonium ou du molybdate d'ammonium.

4. Un procédé suivant la revendication 2, tel qu'appliqué pour la protection de substrats de métaux non ferreux, caractérisé en ce que l'inhibiteur est du tolytriazole de sodium.

5. Un procédé suivant l'une quelconque des revendications 1 à 4, caractérisé en ce que la composition comporte en outre un agent chélatant selon une quantité égale à environ 1/10e du métal total apporté par le constituant siccatif métallique, constituant (d).

6. Un procédé suivant la revendication 5, caractérisé en ce que l'agent chélatant est la 1,1,1-phénanthraline.

7. Un procédé suivant l'une quelconque des revendications 1 à 6, caractérisé en ce que la composition contient en outre, par rapport au poids total de la composition, de 0,05 à 3% d'un agent tensio actif.

8. Un procédé suivant la revendication 7, caractérisé en ce que l'agent tensio actif est un alcool.

9. Un procédé suivant l'une quelconque des revendications 1 à 8, caractérisé en ce que la résine alkyde est une résine alkyde contenant des groupes esters obtenus à partir de l'acide isophtalique, de l'acide téréphtalique ou d'anhydride phtalique, et a une masse moléculaire moyenne dans l'intervalle de 150 à 450 et un indice d'acide dans l'intervalle de 15 à 100.

10. Un procédé suivant l'une quelconque des revendications 1 à 9, caractérisé en ce que l'agent de couplage est un éther d'éthylène glycol, un éther-alcool ou un alcool.

11. Un procédé suivant la revendication 10, caractérisé en ce que l'agent de couplage est choisi parmi les éthers butyliques ou propyliques d'éthylène glycol, l'éthyl-, le propyl-, ou le butylcellosolve, l'éther monoéthylique ou monopropylique du diéthylène glycol, l'éthanol, l'isopropanol et l'isobutanol.

12. Un procédé suivant l'une quelconque des revendications 1 à 11, caractérisé en ce que le constituant (c) est l'hydroxyde d'ammonium, la morpholine, l'éthanolamine, le diéthanolamine ou la triéthanolamine.

13. Un procédé suivant l'une quelconque des revendications 1 à 12, caractérisé en ce que le siccatif métallique, constituant (d), est un siccatif au cobalt ou au manganèse, ou un mélange des deux.

14. Un procédé suivant la revendication 13, caractérisé en ce que le siccatif métallique, constituant (d) comprend à la fois un siccatif à 6% de cobalt et un siccatif à 6% de manganèse.

15. Un procédé suivant l'une quelconque des revendications 1 à 14, caractérisé en ce que la composition contient en outre un colorant ou pigment dispersable dans l'eau.

16. Un procédé suivant l'une quelconque des revendications 1 à 15, caractérisé en ce que la composition du revêtement est appliquée sur le substrat sous la forme d'un revêtement unique ayant une épaisseur dans l'intervalle de 0,5 à 3 mils (13 à 67 µm).